# EUROPÄISCHE PATENTANMELDUNG

(11) **EP 2 849 317 A1**
(43) Veröffentlichungstag der Anmeldung: **18.03.2015**
(21) Anmeldenummer: 13184287.4
(22) Anmeldetag: 13.09.2013
(51) Int. Cl.: H02K 5/02, H02K 5/20

(54) **Elektrische Maschine mit Grundkörper aus Beton**

(71) Anmelder: Siemens Aktiengesellschaft, 80333 München (DE)
(72) Erfinder: Greul, Wolfgang Johann, 91126 Schwabach (DE)

(57) **Zusammenfassung**

Es solle eine einfach aufbaubare und kostengünstig herstellbare elektrische Maschine bereitgestellt werden. Dazu wird eine elektrische Maschine mit einem Maschinengrundkörper (6) vorgeschlagen, an dessen Oberfläche Aktivteile (1, 2) separat gelagert sind. Der Maschinengrundkörper (6) ist aus einem Beton, z. B. Zementbeton oder Polymerbeton, gegossen. Die Lagerung des Stators (1) kann etwa auf Achshöhe oder darunter erfolgen.

## Beschreibung

Die vorliegende Erfindung betrifft eine elektrische Maschine, die elektromagnetisch wirksame Aktivteile mit einer Maschinenachse, um die oder entlang der eines der Aktivteile relativ zu einem anderen der Aktivteile bewegbar ist, und einen Maschinengrundkörper, der aus einem Beton gegossen ist, aufweist. Unter einer elektrischen Maschine wird hier insbesondere ein Elektromotor oder Generator verstanden. Bei dem Elektromotor kann es sich um einen rotatorischen Motor oder einen Linearmotor handeln.

Elektromotoren werden häufig mit einem Gehäuse aus Grauguss oder Stahl und zwei Lagerschilden ausgeführt. Die diesbezüglichen Konstruktionen und die verwendeten Werkstoffe sind in vielerlei Hinsicht optimiert. Dennoch treten zahlreiche Probleme bei Gehäusen aus den Werkstoffen Grauguss oder Stahl auf:
a) Beim Erstarren des Gusses entstehen Spannung im Material, die sich bei der Bearbeitung zum Teil lösen und das Bauteil verziehen. Gleiches gilt für geschweißte Stahlgehäuse, die sich durch die eingebrachte Wärme verziehen. Aufgrund dieser Gussspannungen müssen Bauteile oftmals mehrfach bearbeitet werden. So wird beispielsweise zwischen einer Schrubb- und einer Schlichtbearbeitung das Gussteil gelüftet und neu gespannt. Dadurch verlängert sich die Bearbeitungszeit deutlich.
b) Werden die Bauteile im Sandgussverfahren erstellt, muss mit Gusstoleranzen von mehreren Millimetern gerechnet werden. Gleiches gilt bei den Toleranzen von geschweißten Bauteilen. Daher müssen alle Funktionsflächen, die eine Schnittstelle nach innen oder außen darstellen, spanend bearbeitet werden. Solche Funktionsflächen sind beispielsweise Fußflächen des Gehäuses, Anlageflächen für einen Stator oder Aufnahmen für Lager.
c) Elektrische Leitungen müssen ungeschützt an der Außenseite des Motors im Sichtbereich verlegt werden. Es lassen sich in Grauguss oder Stahl keine Leerrohre für Leitungen oder Luftführungen integrieren. Ein zusätzliches Problem dabei ist, dass die Leitungen aufwendig beim Lackieren abgedeckt und/oder nachlackiert werden müssen. Eine Alternative hierzu sind zusätzliche Kabelkanäle, in denen die Leitungen verlegt werden können.
d) Die Kosten für Bearbeitung und Material der Grauguss- oder Stahlgehäuse sind kaum mehr reduzierbar. Bislang wurde hauptsächlich durch Materialeinsparungen versucht, die Materialkosten zu senken.

Aus der Druckschrift WO 2012/003846 A1 ist ein magnetisches Getriebe mit einem Stator zwischen zwei Läufern bekannt. Der Stator ist aus einem Trägermaterial und darin eingebetteten weichmagnetischen Elementen hergestellt, wobei das Trägermaterial Beton ist.

Darüber hinaus ist in der Druckschrift DE 1 179 629 ein Gehäuse für einen Elektromotor aus Beton beschrieben, der unmittelbar an den Stator der Maschine unter Einschluss der Wickelköpfe angegossen ist. Der Beton ist mit einer vorgespannten Armierung versehen, die aus einem um den Stator verlaufenden Drahtgitter besteht.

Die Aufgabe der vorliegenden Erfindung besteht somit darin, eine elektrische Maschine bereitzustellen, deren Gehäuse bzw. Teilgehäuse vereinfacht hergestellt werden kann.

Erfindungsgemäß wird diese Aufgabe gelöst durch eine elektrische Maschine aufweisend
- elektromagnetisch wirksame Aktivteile mit einer Maschinenachse, um die oder entlang der eines der Aktivteile relativ zu einem anderen der Aktivteile bewegbar ist, und
- einen Maschinengrundkörper, der aus einem Beton gegossen ist,
   wobei
- jedes der Aktivteile separat an der Oberfläche des Maschinengrundkörpers gelagert ist. Insbesondere sind die Aktivteile zerstörungsfrei abnehmbar an dem Maschinengrundkörper befestigt.

In vorteilhafter Weise wird also der Maschinengrundkörper, der einen Teil oder das ganze Gehäuse der elektrischen Maschine bildet, aus Beton hergestellt. Beton wird üblicherweise kalt vergossen, so dass deutlich weniger Gussspannungen entstehen. Außerdem sind die Gusstoleranzen wesentlich geringer als bei Sandgussverfahren, wobei die Bearbeitung von Funktionsflächen entfallen kann. Vorteilhaft ist außerdem, dass die Aktivteile and der Oberfläche des Maschinengrundkörpers befestigt sind, wodurch sie leicht austauschbar sind.

In einer Ausführungsform ist eines der Aktivteile ein Rotor mit einer Welle, die mittels einer Lagerschale oder eines Lagerschilds direkt an dem Maschinengrundkörper gelagert ist. Der Maschinengrundkörper hat also nicht nur Schutzfunktion, sondern er nimmt auch die Kräfte des Rotors auf und stabilisiert ihn gegenüber einem Stator und anderen Komponenten der elektrischen Maschine.

Darüber hinaus kann eines der Aktivteile ein Stator sein, der mittels einer Trägereinrichtung direkt an dem Maschinengrundkörper befestigt ist. Dies bedeutet, dass der aus Beton gefertigte Maschinengrundkörper die Kräfte des Stators aufnimmt. Damit ist beispielsweise eine unmittelbare Kraftübertragung vom Stator über den Maschinengrundkörper zum Rotor oder umgekehrt gewährleistet.

Die Trägereinrichtung kann zwei Träger aufweisen, die sich hauptsächlich entlang des Stators parallel zu der Maschinenachse erstrecken. Solche länglichen Träger lassen sich beispielsweise an dem Maschinengrundkörper und dem Stator zur Fixierung des Stators anschrauben.

Die Trägereinrichtung kann alternativ auch vier Auflagerelemente aufweisen, die paarweise in Richtung der Maschinenachse hintereinander angeordnet sind. So können auf jeder Längsseite der elektrischen Maschine zwei solcher Auflagerelemente vorgesehen sein. Gegebenenfalls sind an jeder Längsseite auch mehr als zwei solcher Auflagerelemente vorgesehen. Damit können günstige, punktförmige Auflager realisiert werden.

Vorzugsweise besitzt der Maschinengrundkörper senkrecht zur Maschinenachse einen im Wesentlichen U-förmigen Querschnitt. An den freien Enden der Schenkel des U-förmigen Maschinengrundkörpers kann beispielsweise der Stator der elektrischen Maschine zuverlässig abgestützt werden.

Des Weiteren kann der Maschinengrundkörper eine Bodenfläche, über der sich in einer Achshöhe die Maschinenachse befindet, aufweisen und die Trägereinrichtung im Wesentlichen ebenfalls in der Achshöhe über der Bodenfläche angeordnet sein. Damit ist eine optimale Stütze hinsichtlich der auftretenden Drehmomente gegeben.

Günstigerweise ist die Oberfläche des Maschinengrundkörpers ausschließlich durch Guss hergestellt. Dies bedeutet, dass auch die Funktionsflächen des Maschinengrundkörpers nach dem Guss nicht nachbearbeitet sind. Dies ist möglich, da der betonierte Maschinengrundkörper in der Regel sehr kleine Toleranzen besitzt.

Ferner können bereits vorher bearbeitete Funktionselemente (Gewindehülsen, Stahlleisten, Fußflächen) aus Stahl oder Eisenguss in den Maschinengrundkörper eingegossen werden. Damit ist eine einfache Befestigung des Maschinengrundkörpers an einer anderen Vorrichtung oder die Befestigung beispielsweise des Stators an dem Maschinengrundkörper technisch einfach lösbar.

In den Maschinengrundkörper kann außerdem ein Leerrohr oder ein Kanal eingegossen sein, das/der Teil eines Kühlsystems ist oder das/der eine (elektrische) Leitung beinhaltet. Damit ist es nicht notwendig, an der Innenseite oder Außenseite des Gehäuses Leitungen oder Kanäle vorzusehen, die gegebenenfalls sehr aufwendig zu lackieren sind oder beim Lackieren kompliziert abgedeckt werden müssen.

Vorzugsweise besitzt der Stator ein Blechpaket, das außen durch mindestens ein Versteifungselement, dessen Längsachse parallel zur Maschinenachse verläuft, stabilisiert ist. Durch die äußere Stabilisierung des Blechpakets kann das Innere des Blechpakets eher hinsichtlich der Magnetführung optimiert werden.

Speziell kann in dem Versteifungselement eine Leitung (elektrische Leitung oder Kühlleitung) verlaufen. Dies ist insbesondere dann möglich, wenn das Versteifungselement einen O-oder U-Querschnitt besitzt. Damit kommt dem Versteifungselement eine doppelte Funktionalität zu.

Des Weiteren kann an dem Versteifungselement ein Klemmkasten befestigt sein. Dies hat den Vorteil, dass der Klemmkasten zum einen mechanisch stabil gehalten wird und zum anderen die Leitungen aus dem Klemmkasten in oder an dem Versteifungselement weitergeführt werden können.

Um den Stator und das mindestens eine Versteifungselement kann auch eine Haube angeordnet sein, die mit dem Maschinengrundkörper ein Gehäuse der elektrischen Maschine bildet. Eine solche Haube schützt die elektrische Maschine vor Umwelteinflüssen. Sie kann an den Stirnseiten der elektrischen Maschine offen oder geschlossen sein. So kann ein separates Lagerschild in die offene Haube eingesetzt werden oder das Lagerschild ist im Falle einer geschlossenen Haube in diese integriert.

Der Beton, aus dem der Maschinengrundkörper gegossen ist, kann ein Polymerbeton (auch Mineralguss genannt) sein. Dabei bildet beispielsweise ein Epoxidharz das Bindemittel. Alternativ kann als Beton auch ein mineralisches Gemisch mit Zement als Bindemittel (Zementbeton) eingesetzt werden.

Die vorliegende Erfindung wird nun anhand der beigefügten Zeichnungen näher erläutert, in denen zeigen:
- FIG 1: eine elektrische Maschine mit am betonierten Grund-körper befestigtem Blechpaket;
- FIG 2: eine elektrische Maschine mit in Achshöhe befestigtem Blechpaket;
- FIG 3: die elektrische Maschine von FIG 2 ohne Haube;
- FIG 4: eine elektrische Maschine mit Stehlagern am Maschinengrundkörper; und
- FIG 5: einen Querschnitt durch eine elektrische Maschine mit betoniertem Maschinengrundkörper und Blechpaketversteifungen zur Kabelführung.

Die nachfolgend näher geschilderten Ausführungsbeispiele stellen bevorzugte Ausführungsformen der vorliegenden Erfindung dar.

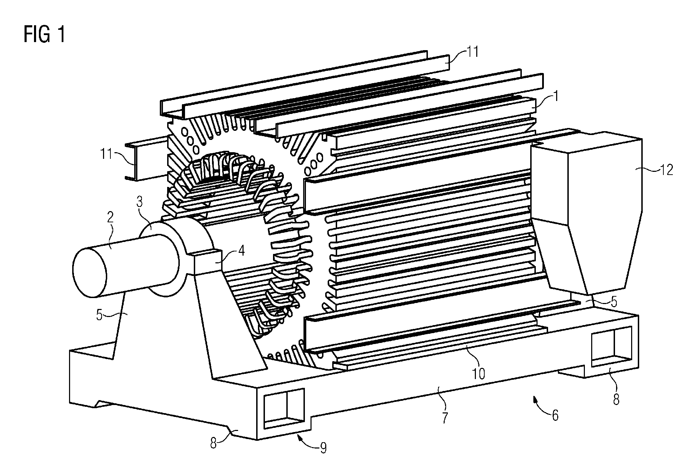

In dem Beispiel von FIG 1 ist skizzenhaft ein Elektromotor als elektrische Maschine dargestellt. Er besitzt einen Stator 1, der im Wesentlichen durch ein Blechpaket gebildet ist. An einer Stirnseite des Stators ist dessen Wickelkopf zu erkennen. Im Inneren des Stators 1 befindet sich ein Rotor 2, der in FIG 1 lediglich durch dessen Welle symbolisiert ist.

Die Welle bzw. der Rotor 2 ist in einer Lagerschale 3 außerhalb des Stators 1 gelagert. Die Lagerschale 3 ist im Wesentlichen ringförmig aufgebaut und besitzt in ihrem Inneren ein Lager oder stellt den Außenring eines Gleitlagers dar. Am Außenumfang besitzt die Lagerschale 3 beispielsweise eine oder mehrere nach außen ragenden Drehmomentstützen 4. Die Lagerschale 3 ist auf einen Lagerfuß 5 gestützt, der Teil eines gegossenen, einteiligen Maschinengrundkörpers 6 ist. Ein solcher Lagerfuß 5 befindet sich in diesem Beispiel an beiden Stirnseiten des Stators 1, um den Rotor 2 mit entsprechenden Lagerschalen 3 beidseitig an der Oberfläche des Maschinengrundkörpers 6 zu lagern. Jede Lagerschale 3 ist z.B. auf den jeweiligen Lagerfuß 5 geschraubt, so dass der Rotor 2 vor allem zu Reparaturzwecken von dem Maschinengrundkörper 6 zerstörungsfrei lösbar ist.

Der Maschinengrundkörper 6 besitzt hier außerdem eine Grundplatte 7, auf deren Oberfläche der Stator 1 befestigt ist, und an deren Rändern die Lagerfüße 5 senkrecht nach oben stehen. An den Ecken der rechteckigen Grundplatte 7 sind einteilig Füße 8 angeformt, die an ihrer Unterseite entsprechende Standflächen 9 besitzen. Auf diesen Standflächen 9 steht die elektrische Maschine im Betrieb auf einem geeigneten Untergrund, z. B. Sockel eines Anwenders.

Die Struktur des Maschinengrundkörpers 6 einschließlich seiner Grundplatte 7, seinen Füßen 8 und den Lagerstützen 5 ist rein beispielhaft. Wesentlich ist nur, dass der Maschinengrundkörper aus einem Beton gegossen ist und die Aktivteile der elektrischen Maschine, hier den Stator 1 und den Rotor 2, mechanisch zusammenhält.

Der Maschinengrundkörper 6 ist einteilig und, wie erwähnt, aus Beton gegossen. Bei dem Beton handelt es sich beispielsweise um üblichen Baubeton, wie er im Hochbau oder Tiefbau verwendet wird. Dabei werden mineralische Bestandteile mit Zement als Bindemittel gebunden. Bei dem Beton kann es sich aber auch um Mineralguss handeln, bei dem mineralische Füllstoffe wie Quarzkies, Quarzsand und Gesteinsmehl mit einem Polymer als Bindemittel (z. B. Epoxidharz) gebunden werden. Dieser Werkstoff wird auch als Polymerbeton oder Reaktionsharzbeton bezeichnet. In jedem Fall wird eine entsprechende Gießform mit dem zunächst flüssigen Beton vergossen.

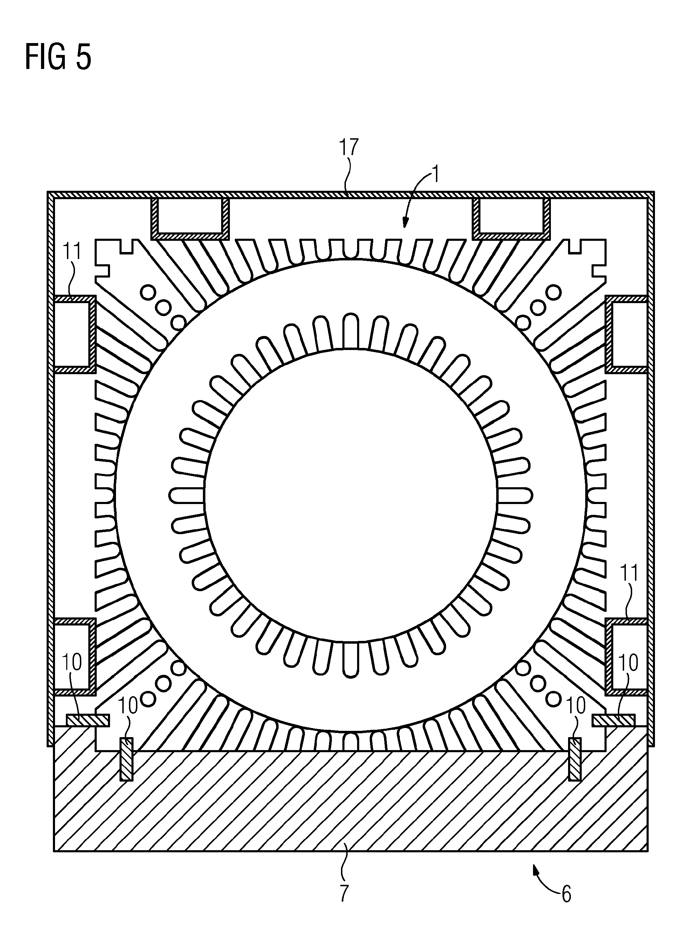

In dem Beispiel von FIG 1 besitzt die Grundplatte 7 des Maschinengrundkörpers 6 eine Vertiefung, in die das Blechpaket des Stators 1 eingesetzt ist. Mit einer zusätzlichen Trägereinrichtung kann das Blechpaket formschlüssig an dem Maschinengrundkörper 6 zerstörungsfrei lösbar befestigt, z. B. angeschraubt werden. Im vorliegenden Beispiel handelt es sich bei der Trägereinrichtung um eine längliche Platte 10, die sich über die gesamte axiale Länge des Blechpakets erstreckt. Auf der gegenüberliegenden Seite ist eine gleiche Platte 10 vorgesehen (vgl. auch FIG 5).

Das Blechpaket des Stators 1 ist hier durch Versteifungselemente 11 versteift. An jeder freien Seite des Blechpakets sind hier zwei solcher Versteifungselemente 11 angeordnet. Sie besitzen z.B. einen U-förmigen Querschnitt und verlaufen parallel zu der Maschinenachse, d.h. der Achse des Rotors 2. Prinzipiell können die Versteifungselemente 11 auch ein anderes Profil besitzen, z. B. Vollmaterial, 0-Querschnitt, Doppel-T-Querschnitt und dergleichen. Der U-Querschnitt hat den Vorteil, dass in dem Versteifungselement dann sehr vorteilhaft Leitungen verlegt werden können.

An den Versteifungselementen 11 ist im Beispiel von FIG 1 ein Klemmkasten 12 angebracht. Dieser dient in bekannter Weise als Schnittstelle zwischen den elektrischen Leitungen der elektrischen Maschine und den Versorgungsleitungen von außen.

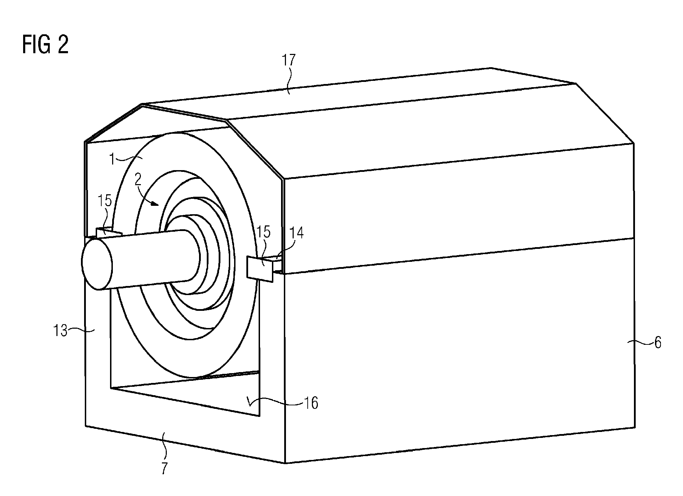

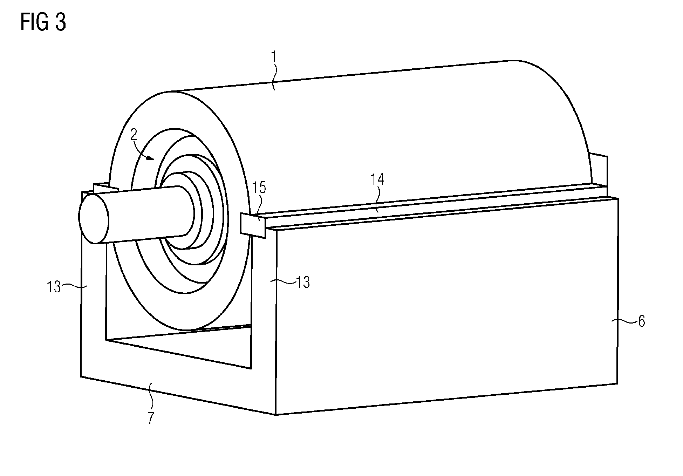

Die FIG 2 und 3 zeigen ein weiteres Ausführungsbeispiel der vorliegenden Erfindung. Der Maschinengrundkörper 6 besitzt hier in Richtung der Maschinenachse, d.h. der Drehachse des Rotors 2 beispielsweise immer den gleichen U-förmigen Querschnitt. Der hier einfach hohlzylindrisch angedeutete Stator 1 wird in diesem Beispiel an den freien Enden der über der Grundplatte 7 des Maschinengrundkörpers 6 senkrecht stehenden Schenkel 13, d.h. ebenfalls an der Oberfläche des Maschinengrundkörpers 6, getragen. Hierzu dienen zu beiden Seiten des Stators 1 vorzugsweise exakt bezogen auf die Maschinenachse gegenüberliegend zwei vom Maschinengrundkörper lösbare Längsträger 14. Diese hier stabförmigen Längsträger erstrecken sich über die gesamte Länge des Stators 1 und besitzen an ihren Stirnseiten Sicherungselemente 15, mit denen Formschluss oder Kraftschluss zu dem Stator 1 in Bezug auf die Richtung der Maschinenachse hergestellt ist.

Die Lagerung des Stators 1 an dem Maschinengrundkörper 6 erfolgt hier also in der Höhe der Maschinenachse, d.h. der Drehachse des Rotors 2 und der Mittelachse des Stators 1, bezogen auf eine Bodenfläche 16 der Grundplatte 7. Die Aufhängung des Stators 1 erfolgt optional lediglich mittels der Längsträger 14, welche sich vorzugsweise in etwa der gleichen Höhe über der Bodenfläche 16 befinden wie die Maschinenachse.

Der U-förmige Maschinengrundkörper 6 bildet eine Gehäusehälfte bzw. Gehäuseunterseite der elektrischen Maschine. In FIG 2 ist darauf eine Haube 17 angebracht, die die Gehäuseoberseite darstellt. Die Stirnseiten des Gehäuses und insbesondere des Maschinengrundkörpers 6 sind hier offen dargestellt. Zur Lagerung des Rotors 2 ist daher beispielsweise ein Lagerschild vorzusehen, das auf diese offenen Stirnseiten montiert werden muss. Das Lagerschild kann durch eine Stahlscheibe realisiert werden, aber auch durch eine einteilig an die Stirnseite des Maschinengrundkörpers angegossenen Wand (in den FIG 2 und 3 nicht dargestellt). In diese Wand kann dann beispielsweise eine Lagerschale 3 gemäß dem Beispiel von FIG 1 für den Rotor 2 eingebracht werden.

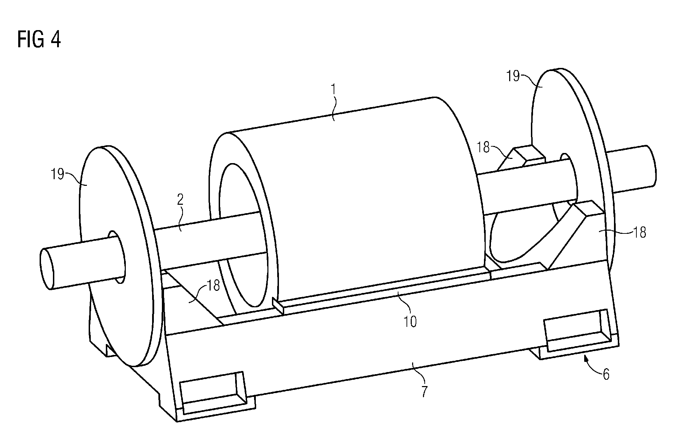

FIG 4 zeigt ein weiteres Ausführungsbeispiel einer elektrischen Maschine gemäß der vorliegenden Erfindung. Der Stator ist als Hohlzylinder angedeutet und der Rotor 2 als darin gelagerte Welle. Der Maschinengrundkörper 6 ist ähnlich demjenigen von FIG 1 einteilig ausgebildet. Anstelle eines Lagerfußes 5 an jeder Stirnseite sind hier zu beiden Seiten der Maschinenachse je eine Lagerschildstütze 18, d.h. jeweils zwei an jeder Maschinenstirnseite, an die Grundplatte 7 des Maschinengrundkörpers 6 angegossen. An diesen Lagerschildstützen 18, d.h. auch hier an der Oberfläche des Maschinengrundkörpers, sind an beiden Stirnseiten der elektrischen Maschine Lagerschilde 19 vorzugsweise lösbar angebracht. In ihnen ist der Rotor 2 gelagert. Ähnlich wie in dem Beispiel von FIG 1 ist der Stator 1 mit stab- oder plattenförmigen Trägerelementen 10 lösbar an dem Maschinengrundkörper 6 befestigt. Die Befestigung erfolgt hier ebenfalls unterhalb der Maschinenachse bezogen auf die Grundplatte 7.

FIG 5 zeigt einen Querschnitt durch die elektrische Maschine von FIG 1 mit einer zusätzlichen Haube 17. Die Haube 17 besitzt hier einen einfachen U-förmigen Querschnitt. Sie bildet zusammen mit dem Maschinengrundkörper 6 das Gehäuse der elektrischen Maschine. Das Blechpaket des Stators 1 besitzt quadratischen Querschnitt und ist in eine Vertiefung der Grundplatte 7 eingesenkt. Vier stabförmige Träger 10 dienen zur lösbaren Befestigung des Blechpakets an dem Maschinengrundkörper 6. Die Befestigung erfolgt teilweise durch Formschluss und teilweise beispielsweise durch Aufschrauben des jeweiligen Trägers 10 auf eine Oberfläche des Maschinengrundkörpers 6.

Die Versteifungselemente 11 befinden sich an den freien Seiten des Blechpakets. Sie stützen gleichzeitig die Wände der Haube 17. Die jeweilige Wand schließt dann das U-Profil jedes Versteifungselements 11, so dass darin eine elektrische Leitung oder ein Kühlmittel geführt werden kann.

Erfindungsgemäß kann also, anstatt einen Elektromotor mit einem Guss- oder Stahlgehäuse und zwei Lagerschilden auszuführen, ein Maschinengrundkörper (Wanne) aus Beton, Polymerbeton oder Mineralguss eingesetzt werden. Dieser kann je nach Ausprägung auch die Funktion eines tragenden Elements erhalten. Die Lagerung kann durch Stehlager (FIG 4) oder Lagerschalen, welche auf dem Beton aufliegen (FIG 1) realisiert werden. Die Befestigung/Aufhängung eines Aktivteils der elektrischen Maschine, insbesondere des Stators, kann unten in der Betonwanne oder direkt auf Achshöhe mittels Längsträger erfolgen.

Der Polymerbeton bzw. Mineralguss oder Zementbeton (nachfolgend einfach Beton) besitzt Eigenschafen, die bei geeigneter konstruktiver Gestaltung folgende Vorteile gegenüber Grauguss oder Stahl haben:
a) Da Beton kalt vergossen wird, enthält das Material weniger Spannungen als ein vergleichbares Bauteil aus Grauguss.
b) Mit Beton können sehr hohe Abformgenauigkeiten erreicht werden, was ein nachträgliches Bearbeiten von Funktionsflächen (mechanische Schnittstellen des Maschinengrundkörpers) überflüssig macht. Solche Schnittstellen sind beispielsweise die Standflächen 9 und die Oberfläche des Lagerfußes 5 für die Lagerschale 3 in dem Beispiel von FIG 1 oder die Auflageflächen zwischen Stator und Maschinengrundkörper in den FIG 2 und 3. Wird an bestimmten Stellen dennoch eine Bearbeitung benötigt, können hierfür Stahlleisten mit in den Beton eingegossen werden, die mit den konventionellen Werkzeugen für Guss oder Stahl spanend bearbeitet werden können.
c) In den Maschinengrundkörper aus Beton lassen sich Leerrohre bei der Herstellung mit einbringen. Diese können zur Luftführung oder für die Verlegung von elektrischen Leitungen genutzt werden. Alternativ können Stahlprofile, welche als Versteifungselemente im Blechpaket genutzt werden, zur Verlegung von Leitungen verwendet werden.
d) Ein Maschinengrundkörper (auch Maschinenträger genannt) aus Beton ist günstiger als ein vergleichbares Gehäuse aus Stahl oder Grauguss. Der Materialpreis liegt unterhalb des Preises für Stahl oder Grauguss. Außerdem können die Kosten für Bearbeitungen der Funktionsflächen aufgrund der hohen Abformgenauigkeit reduziert oder sogar eliminiert werden. Benötigte Gewindebuchsen oder Stahlleisten für eine nachträgliche Bearbeitung können beim Eingießen mit eingebracht und formschlüssig verbunden werden.

## Patentansprüche

1. Elektrische Maschine aufweisend
- elektromagnetisch wirksame Aktivteile (1, 2) mit einer Maschinenachse, um die oder entlang der eines der Aktivteile relativ zu einem anderen der Aktivteile bewegbar ist, und
- einen Maschinengrundkörper (6), der aus einem Beton gegossen ist,
**dadurch gekennzeichnet, dass** jedes der Aktivteile separat an der Oberfläche des Maschinengrundkörpers (6) gelagert ist.

2. Elektrische Maschine nach Anspruch 1, wobei eines der Aktivteile (1, 2) ein Rotor mit einer Welle ist, die mittels einer Lagerschale oder eines Lagerschilds direkt an dem Maschinengrundkörper (6) gelagert ist.

3. Elektrische Maschine nach Anspruch 1 oder 2, wobei eines der Aktivteile (1, 2) ein Stator (1) ist, der mittels einer Trägereinrichtung (10, 14) direkt an dem Maschinengrundkörper (6) befestigt ist.

4. Elektrische Maschine nach Anspruch 3, wobei die Trägereinrichtung (10, 14) zwei Träger aufweist, die sich hauptsächlich entlang des Stators (1) parallel zu der Maschinenachse erstrecken.

5. Elektrische Maschine nach Anspruch 3, wobei die Trägereinrichtung (10, 14) vier Auflagerelemente aufweist, die paarweise in Richtung der Maschinenachse hintereinander angeordnet sind.

6. Elektrische Maschine nach einem der vorhergehenden Ansprüche, wobei der Maschinengrundkörper (6) senkrecht zur Maschinenachse einen im Wesentlichen U-förmigen Querschnitt besitzt.

7. Elektrische Maschine nach einem der Ansprüche 3 bis 6, wobei der Maschinengrundkörper (6) eine Bodenfläche (16), über der sich in einer Achshöhe die Maschinenachse befindet, aufweist, und die Trägereinrichtung (10, 14) im Wesentlichen ebenfalls in der Achshöhe über der Bodenfläche angeordnet ist.

8. Elektrische Maschine nach einem der vorhergehenden Ansprüche, wobei die Oberfläche des Maschinengrundkörpers (6) ausschließlich durch Guss hergestellt ist.

9. Elektrische Maschine nach einem der vorhergehenden Ansprüche, wobei in den Maschinengrundkörper (6) ein Funktionselement aus Stahl oder Eisenguss eingegossen ist.

10. Elektrische Maschine nach einem der vorhergehenden Ansprüche, wobei in den Maschinengrundkörper (6) ein Leerrohr eingegossen ist, das an ein Kühlsystem angeschlossen ist oder das eine elektrische Leitung beinhaltet.

11. Elektrische Maschine nach einem der Ansprüche 3 bis 10, wobei der Stator (1) ein Blechpaket aufweist, das außen durch mindestens ein Versteifungselement (11), dessen Längsachse parallel zur Maschinenachse verläuft, stabilisiert ist.

12. Elektrische Maschine nach Anspruch 11, wobei in dem Versteifungselement (11) eine elektrische Leitung verläuft.

13. Elektrische Maschine nach Anspruch 11 oder 12, wobei an dem Versteifungselement ein Klemmkasten (12) befestigt ist.

14. Elektrische Maschine nach einem der Ansprüche 11 bis 13, wobei um den Stator (1) und das Versteifungselement (11) eine Haube (17) angeordnet ist, die mit dem Maschinengrundkörper (6) ein Gehäuse der elektrischen Maschine bildet.

15. Elektrische Maschine nach einem der vorhergehenden Ansprüche, wobei der Beton ein Zementbeton oder Polymerbeton ist.
